# EUROPÄISCHE PATENTSCHRIFT

(11) **EP 1 663 551 B1**
(45) Veröffentlichungstag und Bekanntmachung des Hinweises auf die Patenterteilung: **08.10.2008**
(21) Anmeldenummer: 04764842.3
(22) Anmeldetag: 04.09.2004
(51) Int. Cl.: B22F 3/105, B22F 5/12, D07B 5/00

(54) **VERFAHREN ZUM HERSTELLEN EINES DRAHTSEILS UND ANWENDUNG DES VERFAHRENS**
METHOD FOR PRODUCING A WIRE CABLE AND USE OF SAID METHOD
PROCEDE POUR FABRIQUER UN CABLE METALLIQUE ET APPLICATION DU PROCEDE

(30) Priorität: 12.09.2003 DE 10342209
(43) Veröffentlichungstag der Anmeldung: 07.06.2006
(73) Patentinhaber: Casar Drahtseilwerk Saar GmbH, 66459 Kirkel (DE)
(72) Erfinder: VERREET, Roland, 52072 Aachen (DE)
(74) Vertreter: Bernhardt, Reinold
(86) Internationale Anmeldenummer: PCT/EP2004/009891
(87) Internationale Veröffentlichungsnummer: WO 2005/025782

(56) Entgegenhaltungen:
- DE-A- 19 905 067

## Beschreibung

Die Erfindung betrifft ein Verfahren zum Herstellen eines Drahtseils.

Ferner bezieht sich die Erfindung auf eine Anwendung eines solchen Verfahrens.

Der Erfindung liegt die Aufgabe zugrunde, ein Drahtseil mit neuen Eigenschaften zu schaffen.

Gemäß der Erfindung wird dieser Zweck in der Weise erfüllt, dass die Drähte bereits in der Seilkonfiguration durch Schichtaufbau hergestellt werden.

Das so entstandene Drahtseil hat nicht die Festigkeit eines normalen Drahtseils. Es ist nur für besondere Zwecke geeignet. Sein Vorteil ist, dass es nicht durch Qualitätsschwankungen des Vormaterials und durch Schwankungen der Fertigungsparameter beeinflusst ist. Einsatzfälle für das Drahtseil bestehen dort, wo seine absolute Gleichmäßigkeit genutzt werden kann.

Die normalen Drahtseile unterliegen Schwankungen im Material und im Durchmesser der Drähte sowie Schwankungen in einer großen Zahl von Fertigungsparametern von den Drähten über die Litzen bis zum Seil, ggf. Kernseil und Endseil.

Die Drähte können verschiedenen Stahlchargen, ferner anderen Ziehfolgen mit unterschiedlichen Querschnittsabnahmen entstammen und daher unterschiedliche Zusammensetzungen, Ausgangsfestigkeiten, Längsverstreckungen und Festigkeitszunahmen haben bzw. erfahren haben.

Sowohl bei der Litzen- als auch der, ggf. mehrstufigen, Seilherstellung können infolge Schwankungen der Maschineneinstellung, wie Vorformung, Spulenabbremsung, Richtrolleneinstellung und Rückdrehung unterschiedliche Eigenschaften hinsichtlich Durchmesser, Dehn-, Drall- und Drehmomentverhalten sowie Eigenspannungen entstanden sein, und zwar in nicht unerheblichem Maße auch über die Länge eines Drahtseils hinweg.

Bei der Herstellung von Proben zur Entwicklung eines Seils ist man zwar bestrebt, wenigstens Drähte des gleichen Herstellers zu verwenden. Auch hi er gibt es jedoch Abweichungen von Mal zu Mal. Und im Laufe der Produktion kann es später mehrfach zu Wechseln des Herstellers und daher weiteren Veränderungen des Drahtseils kommen.

Wo nur kurze Drahtseile benötigt werden und es auf die Gleichmäßigkeit von Drahtseilen ankommt, haben daher die erfindungsgemäß hergestellten Drahtseile einen Vorteil.

Den wesentlichsten Vorteil erreichen sie jedoch in der Ausgestaltung, dass die Drähte jeweils unmittelbar an endseitigen Kupplungsstücken des Drahtseils angeformt werden.

Die normalen Drahtseile werden an den Enden mit Presshülsen versehen oder aufgefächert und eingegossen. Die dortige Unstetigkeit des Seilgefüges wirkt sich weit bis in die Länge des Drahtseils hinein aus. Kurze Seile sind dementsprechend besonders ungleichmäßig, es kommen die in ihren von Hand gefertigten Fassungen an den Enden unvermeidlichen Ungenauigkeiten und deren Auswirkungen hinzu.

Müssen beispielsweise mehrere kurze Drahtseile absolut gleichmäßig zusammenwirken, etwa zu Steuerungszwecken in der Raumfahrt, sind die erfindungsgemäßen Drahtseile mit angeformten Kupplungsstücken trotz hoher Herstellungskosten entschieden von Vorteil.

Eine wichtiges Anwendungsgebiet des erfindungsgemäßen Verfahrens ist die Herstellung von Proben zum Gewinnen von Ausgangsdaten für eine Optimierung einer Drahtseilkonstruktion, wobei Proben gleichen grundsätzlichen Seilaufbaues, aber verschiedener Drahtdurchmesser und/oder Schlaglängen der Litzen, eines Herzseils und/oder des Seils hergestellt werden und die interessierenden Eigenschaftswerte ermittelt werden.

Um z.B. bei einem mehrlagigen Drahtseil die günstigste Schlaglänge für das Herzseil und die günstigste Schlaglänge für das Seil, d.h. die darauf verseilte äußere Litzenlage, zu finden, wird gewöhnlich eine Vielzahl von Probeseilen mit verschiedenen Herzseilschlaglängen und verschiedenen Seilschlaglängen hergestellt.

Daraus werden z.B. fünf bis neun Proben von 1 bis 20 m Länge geschnitten, um im Zerreißversuch E-Modul, Bruchkraft und Überbeanspruchung zu bestimmen; weitere übliche Tests sind der Drehmomentversuch, der Drehwinkelversuch, der Flexibilitätsversuch, die Dauerbiegeprüfung und die Zugschwellprüfung.

Eine an sich wünschenswerte größere Zahl von Varianten scheitert an der Größe des Aufwandes.

Der Aufwand wird noch einmal vergrößert durch die oben bereits erwähnte Störung des Seilverbundes in den Endbereichen der Probeseile.

Nach dem erfindungsgemäßen Verfahren können die Proben in Form von einstückigen Probekörpern, in denen die Drähte jeweils unmittelbar an endseitigen Kupplungsstücken angeformt sind, hergestellt werden.

Die auf diese Weise hergestellten Probekörper sind zwar mit einer Länge von z.B. nur 10 bis 20 cm und mit der Metallstruktur und der Oberfläche der Drähte den Proben aus Drahtseilen, die durch Verseilung gezogener Drähte hergestellt sind, nicht gleichzusetzen. Bei den Versuchen werden andere absolute Werte gefunden.

In der Relation der Werte lassen sich jedoch die Einflüsse der Geometrie, d.h. der Drahtdurchmesser und der Schlaglängenveränderungen, auch hier erkennen. Durch Vergleich mit an Proben üblicher Herstellungsart gefundenen Werten können etwa zu berücksichtigende Korrekturgrößen gefunden werden.

Die Probekörper können auch in Kombination mit einer, entsprechend verminderten, Anzahl üblicher Seilproben bei einer Optimierungsaufgabe verwertet werden.

Die geringe Länge der Probekörper ist kein Nachteil. Bei allen genannten Versuchen außer der Dauerbiegeprüfung hat die Länge der Probe entweder keinen Einfluss oder einen solchen Einfluss, der sich rechnerisch erfassen lässt.

Die auf der anderen Seite erzielten Vorteile sind beträchtlich.

Bei den herkömmlichen Versuchsseilen hängen die Messergebnisse nicht nur von der Veränderung der Seilparameter ab, sondern sie sind überlagert von den oben dargelegten Streuungen aus der Fertigung. Daraus können bekanntlich bei ungünstigem Zusammentreffen große Fehler erwachsen. Bei den gleichmäßigen erfindungsgemäßen Probekörpern lassen sich demgegenüber die Unterschiede der Messergebnisse fast ausschließlich auf die Parameterveränderungen zurückführen.

Das bei der üblichen Probeseilherstellung vorhandene Problem der Verfügbarkeit der Drähte und der Durchmessertoleranzen entfällt völlig.

Die Störung der Seilstruktur an den beiden Enden ist nur geringfügig und weitgehend vernachlässigbar. Die Drähte werden am Ende nicht durch die Fassung von vornherein verbogen und/oder in ihrem Querschnitt verformt. Sie gehen auf ihrem vollen Querschnitt im gleichen Material in das Kupplungsstück über.

Die zuvor erwähnten Vorteile hatten erfindungsgemäß hergestellte Probestücke ohne angeformte Kupplungsstücke aber gleichermaßen.

Nach einer Weiterbildung der Erfindung wird der Aufbau der Drähte in einer Lage der Drähte zueinander begonnen, die der Anpressung der Drähte aneinander bei einer Belastung des Drahtseils entspricht oder angenähert ist, und auf einem anschließenden kurzen Abschnitt werden die Drähte so weit aufgefächert, dass sie dann nötigenfalls getrennt voneinander aufgebaut werden können. Am Ende wird entsprechend vorgegangen.

Damit wird eine kleine ggf. auch nach der Erfindung auftretende Unstetigkeit des Seilgefüges an den Enden gemildert und ihre Auswirkung in die Länge des Drahtseils hinein verkürzt:

Die getrennt voneinander aufgebauten Drähte pressen sich bei Belastung auf ihrer Länge aneinander, sind an den Enden aber auf dem ursprünglichen Abstand gehalten. Dieser ist ohne die vorstehende Maßnahme größer, so dass sich eine Auffächerung der Drähte zum Ende hin ergibt.

Die vorgeschlagene umgekehrte Auffächerung schließt sich dagegen bei Belastung unter leichter Verbiegung der Drähte, und die Seilgeometrie bleibt gleichmäßig bis zum Ende.

Sofern sich eine Störung durch die Verbiegung der Drähte zeigt, kann man die Maßnahme auch nur begrenzt treffen und einen immer noch vorteilhaften Kompromiß zwischen der betreffenden Verbiegung der Drähte und der Auffächerung der Drähte zum Ende hin finden.

Analog kann der Aufbau der Drähte unter einem Winkel der Drähte zur Querschnittsebene des Drahtseils begonnen werden, der dem Winkel bei einer Belastung des Drahtseils gleich oder angenähert ist, und dann werden die Drähte in den Winkel umgelenkt, der ohne Belastung vorgesehen ist.

Die genannte der Anpressung entsprechende Lage der Drähte zueinander bedeutet, dass die Drähte dort zusammengewachsen sind. Das Drahtseil erhält damit Zusammenhalt, auch wenn die Drähte nicht an Kupplungsstücke angeformt sind. In einer Lage in Abstand voneinander könnten die Drahtenden durch zwischen ihnen aufgebaute Stege verbunden werden.

An solche Enden eines Drahtseils könnten Kupplungsstücke auch angeschweißt oder angegossen, ggf. auch angeklebt werden.

Einen Probekörper wird man in der Regel einerseits bestrebt sein, möglichst kurz zu halten, um für den Schichtaufbau die Aspektverhältnisse (Drahtdurchmesser zu Höhe) nicht zu hoch werden zu lassen. Andererseits sollten die Probekörper immerhin eine Länge von mindestens der größten in ihnen enthaltenen Schlaglänge einer Litze, eines Herzseils oder des Seils aufweisen, damit ein seiltypisches Verhalten zustande kommt.

Die schlanken Drahtseile lassen es zu, in weiterer vorteilhafter Ausgestaltung der Erfindung eine Mehrzahl, vorzugsweise eine Vielzahl, von Drahtseilen in demselben Arbeitsgang herzustellen.

Das bedeutet nicht nur die augenfällig damit verbundene Rationalisierung. Es werden außerdem Fertigungsstreuungen infolge Abweichungen zwischen verschiedenen Arbeitsgängen eliminiert, die auch hier, allerdings nur in sehr geringem Maße, auftreten können.

Der Werkstoff kann demjenigen wirklicher Drähte nicht vergleichbar sein. Die normalerweise vorhandenen metallurgischen Möglichkeiten bestehen nicht, die durch das Walzen und Ziehen der Drähte entstehenden Texturen können nicht geschaffen werden.

Unter den im Rahmen des Selective Laser Meltings bekannten Werkstoffverwendungen kann jedoch ein einkomponentiger Werkstoff und als solcher immerhin auch Stahl ausgewählt werden, und das Stahlpulver kann durch den Laserstrahl örtlich vollständig aufgeschmolzen werden, so dass der Werkstoff der erzeugten Drähte im wesentlichen ein Kontinum darstellt. Es wird etwa die Hälfte der Festigkeit normaler Drähte erreicht.

Gegebenenfalls kann der Probekörper als Ganzes noch metallurgischen Wärmebehandlungen unterzogen werden.

Titan kommt ebenfalls als Werkstoff in Betracht.

Das Drahtseil könnte auch aus einer einzige Litze bestehen.

Die Technik des Schichtaufbaues ist in mehreren Varianten bekannt (siehe z.B. DE 199 05 067 A). Das gemeinsame Prinzip ist ein aus drei Schritten bestehender und sich wiederholender Prozessablauf. Zunächst wird eine senkrecht verfahrbare Bauplattform um den durch die Schichtdicke vorgegebenen Betrag abgesenkt. Danach wird eine Werkstoffschicht, z.B. ein Pulver, aufgetragen, so dass die vorangegangene Schicht sowohl auf den verfestigten als auch an den nicht verfestigten Stellen vollständig bedeckt ist. Im abschließenden Schritt werden die in einem 3D-CAD bereitgestellten Bauteilinformationen der aktuellen Schicht mittels Energiestrahlung in den Werkstoff übertragen, um ihn stellenweise zu verfestigen. Die Schritte wiederholen sich, bis das Bauteil aufgebaut ist. Bekannt sind mehrere Systeme, die sich durch die zu verarbeitenden Werkstoffe, die Energiequelle sowie zusätzliche Verfahrensschritte unterscheiden.

Das Selective Laser Melting wird angewandt zur Herstellung von serienidentischen Prototypen, von Einsätzen mit konturangepassten Kühlkanälen für den Werkzeug- und Formenbau sowie anderen Bauteilen mit Hohlstruktur, ferner von Einzelteilen, wie medizinischen Individualimplantaten und Kleinserien.

Bei der erfindungsgemäßen Anwendung des Verfahrens werden demgegenüber keine normal verwendbaren oder mit solchen genau formgleichen Teile erzeugt.

Die Probekörper sind darüber hinaus Gebilde eigener Art, die nur zur Ermittlung von Eigenschaftswerten in Zuordnung zu bestimmten Geometrien vorgesehen und brauchbar sind, wobei auch diese Ergebnisse noch nicht unmittelbar verwendbar sind und erst unter Berücksichtigung von Ähnlichkeitszusammenhängen zu praktisch verwertbaren Konstruktionsdaten führen.

Im folgenden sei die Erfindung anhand einer beispielhaften Darstellung näher erläutert.
- Fig. 1: zeigt eine Vorrichtung zum Durchführen von Selective Laser Melting in einem senkrechten Schnitt,
- Fig. 2: zeigt einen Querschnitt durch ein Drahtseil.

In einem Schacht 1 ist eine heb- und senkbare Plattform 2 als Boden angeordnet, so dass eine Kammer 3 veränderlicher Tiefe gebildet ist. Die Kammer 3 geht an ihrer Oberseite über in eine Prozesskammer 4 von größerem Querschnitt. In der, mit Schutzgas gefüllten, Prozesskammer 4 ist eine Pulverauftragsvorrichtung 5 über die Kammer 3 hinweg verfahrbar. Die Pulverauftragsvorrichtung 5 ist ihrerseits zu befüllen mittels einer mit einem Vorratsbehälter verbundenen Zufuhreinrichtung 6.

Über einem mit einem Einkoppelfenster 7 versehenen Aufsatz 8 der Prozesskammer 4 ist eine Laserstrahlquelle 9 mit einer aus einer CAD-Anlage auf den X-Y-Koordinaten gesteuerten Lenkeinrichtung für den Laserstrahl 10 angeordnet.

In der Kammer 3 erstrecken sich auf deren Höhe in einer Metallpulver-Schüttung 11 drei im Aufbau befindliche Drahtseile 12.

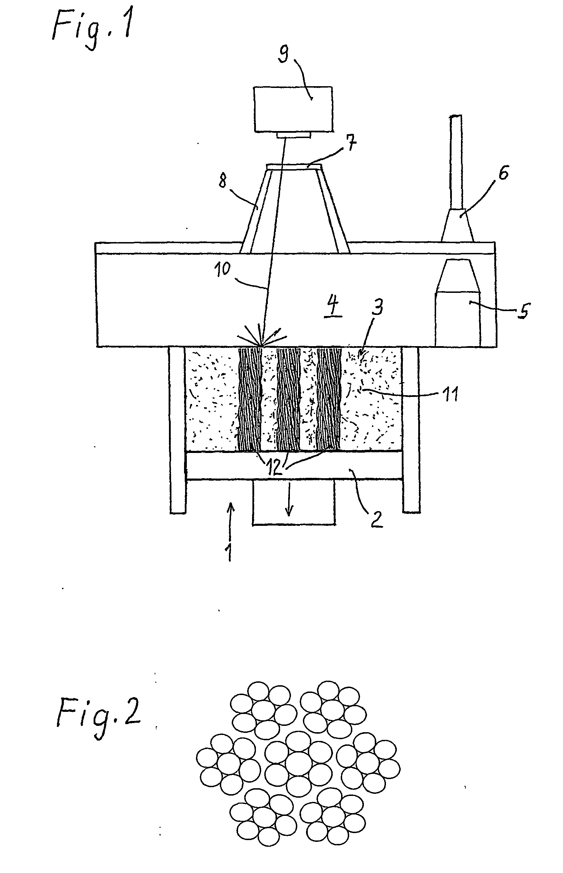

Der Querschnitt der Drahtseile 12 ist in Fig. 2 in größerem Maßstab dargestellt.

### Der Aufbau der Drahtseile vollzieht sich wie folgt:

Die Pulverauftragsvorrichtung 5 fährt über die Kammer 3 und trägt eine Schicht von z.B. 20 µ Dicke gleichmäßig über die Metallpulver-Schüttung 11 und die Drahtquerschnitte auf.

Das Metallpulver besteht beispielsweise aus Werkzeugstahl 1.2343, Edelstahl 1.4404 oder Stahl 42 TrMo4.. Es hat eine Korngröße < 45 µ, könnte aber noch feiner sein.

Nachdem die Schicht gelegt ist, wird der Laserstrahl, beispielsweise mit einer Vor schubgeschwindigkeit von 100 mm/sec, auf parallelen Bahnen über die Metallpulver-Schüttung 1 1 und die auf den Drähten liegende Schicht des Metallpulvers geführt. Er wird jedoch nur eingeschaltet auf denjenigen Querschnittsabschnitten, in denen die Drähte aufgebaut werden sollen. Die betreffenden Geometrieinformationen sind in Form eines 3D-CAD-Modells in der CAD-Anlage bereitgestellt.

Das CAD-Modell ist mittels spezieller Software in Schichten der betreffenden Schichtdicke zerlegt. Entsprechend werden die Laserstrahlquelle und die Lenkung des Laserstrahls gesteuert.

Der Laserstrahl hat in seinem Umkreis eine Wirksamkeit von z.B. 200 µ Durchmesser. Demgemäß liegen die genannten Bahnen in einem Abstand von 100 µ nebeneinander. Die wirksame Tiefe des Laserstrahls ist etwa gleich der Schichtdicke, d.h. z.B. 20 µ.

An den Grenzen der Drahtquerschnitte ist das Einschalten der Laserstrahlquelle verzögert und das Abschalten vorgezogen entsprechend dem Wirkungsdurchmesser des Laserstrahls, um den Drahtdurchmesser von z.B. 1,5 bis 2 mm genau zu erzeugen.

Nach dem Entnehmen der fertigen Drahtseile 12 wird das in deren Hohlräumen befindliche Metallpulver durch Schütteln, Klopfen, Blasen, Schwemmen und/oder dgl., ggf. bis auf kleine Reste, entfernt.

Dafür kann das kurze Drahtseil auch durch Verdrehen und/oder Stauchen im elastischen Verformungsbereich etwas aufgeweitet werden. Bei gegenläufigen Schlagrichtungen in verschiedenen Querschnittsbereichen können diese abwechselnd geringfügig aufgeweitet werden unter stärkerem Zuziehen des anderen Bereiches.

In angeformten Kupplungsstücken können axiale Auslasskanäle zumindest in der Verlängerung der Litzenzwickelräume ausgespart werden.

## Patentansprüche

1. Verfahren zum Herstellen eines Drahtseils,
**dadurch gekennzeichnet,**
**dass** die Drähte bereits in der Seilkonfiguration durch Schichtaufbau hergestellt werden.

2. Verfahren nach Anspruch 1,
**dadurch gekennzeichnet,**
**dass** die Schichten quer zur Erstreckungsrichtung der Drähte liegend erzeugt werden.

3. Verfahren nach Anspruch 1 oder 2,
**dadurch gekennzeichnet,**
**dass** die Drähte, vorzugsweise Stahl oder Titan, durch Selective Laser Melting hergestellt werden.

4. Verfahren nach einem der Ansprüche 1 bis 3,
**dadurch gekennzeichnet,**
**dass** die Drähte jeweils unmittelbar an endseitigen Kupplungsstücken des Drahtseils angeformt werden.

5. Verfahren nach einem der Ansprüche 1 bis 4,
**dadurch gekennzeichnet,**
**dass** der Aufbau der Drähte in einer Lage der Drähte zueinander begonnen wird, die der Anpressung der Drähte aneinander bei einer Belastung des Drahtseils entspricht oder angenähert ist, und die Drähte auf einem anschließenden kurzen Abschnitt so weit aufgefächert werden, dass sie dann getrennt voneinander aufgebaut werden können.

6. Verfahren nach einem der Ansprüche 1 bis 5,
**dadurch gekennzeichnet,**
**dass** der Aufbau der Drähte unter einem Winkel der Drähte zur Querschnittsebene des Drahtseils begonnen wird, der dem Winkel bei einer Belastung des Drahtseils gleich oder angenähert ist, und die Drähte dann in den Winkel umgelenkt werden, der ohne Belastung vorgesehen ist.

7. Verfahren nach Anspruch 5 oder 6,
**dadurch gekennzeichnet,**
**dass** der Aufbau der Drähte am Ende entsprechend vorgenommen wird.

8. Verfahren nach Anspruch 4 oder nach Anspruch 4 und einem der Ansprüche 5 bis 7,
**dadurch gekennzeichnet,**
**dass** in den Kupplungsstücken mindestens in der Verlängerung der Litzenzwickelräume Auslasskanäle für unverfestigtes Metallpulver ausgespart werden.

9. Verfahren nach einem der Ansprüche 1 bis 8,
**dadurch gekennzeichnet,**
**dass** das Drahtseil als Ganzes wärmebehandelt wird.

10. Verfahren nach einem der Ansprüche 1 bis 9,
**dadurch gekennzeichnet,**
**dass** eine Mehrzahl von Drahtseilen, vorzugsweise eine Vielzahl, in demselben Arbeitsgang hergestellt wird.

11. Anwendung eines Verfahrens nach einem der Ansprüche 1 bis 10 zur Herstellung von Proben zum Gewinnen von Ausgangsdaten für eine Optimierung einer Drahtseilkonstruktion, wobei Proben gleichen grundsätzlichen Seilaufbaues, aber verschiedener Drahtdurchmesser und/oder Schlaglängen der Litzen, eines Herzseils und/oder des Seils hergestellt werden und die interessierenden Eigenschaftswerte ermittelt werden.

12. Anwendung nach Anspruch 11,
**dadurch gekennzeichnet,**
**dass** die Proben eine Länge von mindestens der größten in ihnen enthaltenen Schlaglänge einer Litze, eines Herzseils oder des Seils aufweisen.

## Claims

1. Method for producing a wire cable, **characterized in that** the wires are already produced in the cable configuration by a build-up of layers.

2. Method according to Claim 1, **characterized in that** the layers are created such that they lie transversely in relation to the direction of the extent of the wires.

3. Method according to Claim 1 or 2, **characterized in that** the wires, preferably of steel or titanium, are produced by selective laser melting.

4. Method according to one of Claims 1 to 3, **characterized in that** the wires are respectively formed directly onto end coupling pieces of the wire cable.

5. Method according to one of Claims 1 to 4, **characterized in that** the building-up of the wires is begun with the wires in a position in relation to one another that corresponds to or approximates the way in which the wires press against one another when the wire cable is under load, and the wires are splayed out over a short adjoining portion to such an extent that they can then be built up separately from one another.

6. Method according to one of Claims 1 to 5, **characterized in that** the building-up of the wires is begun with the wires at an angle to the cross-sectional plane of the wire cable that is equal to or approximates the angle when the wire cable is under load, and the wires are then deflected to the angle intended for when there is no load.

7. Method according to Claim 5 or 6, **characterized in that** the building-up of the wires is performed correspondingly at the end.

8. Method according to Claim 4 or according to Claim 4 and one of Claims 5 to 7, **characterized in that** outlet channels for unsolidified metal powder are made in the coupling pieces, at least in the extension of the interstitial spaces of the stranded wire.

9. Method according to one of Claims 1 to 8, **characterized in that** the wire cable is heat-treated as a whole.

10. Method according to one of Claims 1 to 9, **characterized in that** a plurality of wire cables, preferably a multiplicity, are produced in one and the same operation.

11. Use of a method according to one of Claims 1 to 10 for producing samples for obtaining background data for optimizing wire cable construction, samples of the same basic built-up cable structure, but of different wire diameters and/or lay length of the strands, of a core cable and/or of the cable being produced and the property values of interest being determined.

12. Use according to Claim 11, **characterized in that** the samples have a length equivalent to at least the greatest lay length of a strand, of a core cable or of the cable contained in them.

## Revendications

1. Procédé pour fabriquer un câble métallique,
**caractérisé en ce que**
les fils sont fabriqués déjà dans la configuration du câble par constitution en couches.

2. Procédé selon la revendication 1,
**caractérisé en ce que**
les couches sont produites en étant situées transversalement à la direction d'extension des fils.

3. Procédé selon la revendication 1 ou 2,
**caractérisé en ce que**
les fils, de préférence en acier ou en titane, sont fabriqués par fusion laser sélective.

4. Procédé selon l'une des revendications 1 à 3,
**caractérisé en ce que**
les fils sont conformés chacun directement au niveau de pièces d'accouplement terminales du câble métallique.

5. Procédé selon l'une des revendications 1 à 4,
**caractérisé en ce que**
la constitution des fils les uns par rapport aux autres est commencée dans une position des fils qui correspond au pressage des fils les uns contre les autres lors de l'application d'une charge au câble métallique ou qui s'en rapproche, et les fils sont mis en éventail sur un court tronçon qui fait suite, aussi loin qu'ils peuvent être alors constitués séparément les uns des autres.

6. Procédé selon l'une des revendications 1 à 5,
**caractérisé en ce que**
la constitution des fils est commencée en disposant les fils sous un angle par rapport au plan de section transversale du câble métallique qui est égal ou approximativement égal à l'angle lors de l'application d'une charge au câble métallique, et les fils sont alors renvoyés sous l'angle qui est prévu sans charge.

7. Procédé selon la revendication 5 ou 6,
**caractérisé en ce que**
la constitution des fils est effectuée de façon correspondante à l'extrémité.

8. Procédé selon la revendication 4 ou selon la revendication 4 et l'une des revendications 5 à 7,
**caractérisé en ce que**
dans les pièces d'accouplement on ménage des canaux d'évacuation, au moins dans le prolongement des espaces intermédiaires entre les torons, pour une poudre métallique non solidifiée.

9. Procédé selon l'une des revendications 1 à 8,
**caractérisé en ce que**
le câble métallique est traité thermiquement dans son ensemble.

10. Procédé selon l'une des revendications 1 à 9,
**caractérisé en ce que**
on fabrique une pluralité de câbles métalliques, de préférence un grand nombre, dans la même passe de travail.

11. Application d'un procédé selon l'une des revendications 1 à 10 pour la fabrication d'échantillons afin de récupérer des données de départ pour une optimisation d'une construction de câble métallique, dans laquelle on produit des échantillons présentant une constitution de câble égale quant à son principe, mais différents diamètres et/ou différents pas de cablage des torons, d'un câble d'âme et/ou du câble, et l'on détermine les valeurs de propriétés intéressantes.

12. Application selon la revendication 11,
**caractérisé en ce que**
les échantillons présentent une longueur qui est au moins le plus grand pas de cablage d'un toron, d'un câble d'âme ou du câble qu'ils contiennent.
